# EUROPÄISCHE PATENTANMELDUNG

(11) **EP 4 793 857 A1**
(43) Veröffentlichungstag der Anmeldung: **19.08.2026**
(21) Anmeldenummer: 26155978.5
(22) Anmeldetag: 03.02.2026
(51) Int. Cl.: G06Q 20/18, G07C 9/32, G07F 9/00, G06V 10/12, G06V 40/16, G07C 9/22, H04N 23/57, H04N 23/695

(54) **SELBSTBEDIENUNGSTERMINAL ZUR ERFASSUNG VON DATEN**

(30) Priorität: 12.02.2025 DE 102025105216
(71) Anmelder: secunet Security Networks Aktiengesellschaft, 45138 Essen (DE)
(72) Erfinder: Schwaiger, Michael, 4291 Lasberg (AT)
(74) Vertreter: Andrejewski - Honke Patent- und Rechtsanwälte Partnerschaft mbB

(57) **Zusammenfassung**

Ein Selbstbedienungsterminal (1) zur Erfassung von Daten von zu kontrollierenden Personen (7) weist ein Kamerasystem (3) auf, wobei das Kamerasystem (3) ein höhenvariables Modul (I) umfasst. Das höhenvariable Modul (4) weist wenigstens eine Kamera (5) auf, wobei das höhenvariable Modul (4) entlang einer Strecke in Höhenrichtung variabel ist, sodass das höhenvariable Modul (4) bzw. die wenigstens eine Kamera (5) bzw. das Kamerasystem (3) aus verschiedenen Höhen heraus Gesichtsbilder von zu kontrollierenden Personen aufnehmen kann. Das Selbstbedienungsterminal (1) weist ein Interaktionsgerät (6) auf, wobei das Interaktionsgerät (6) zur Eingabe von Daten durch eine zu kontrollierende Person (7) und/oder zum Ausgeben von Daten an die zu kontrollierende Person (7) ausgebildet ist. Die Strecke des höhenvariablen Moduls (4) ist - vorzugsweise wenigstens abschnittsweise in Höhenrichtung - in einer Vorderansicht des Selbstbedienungsterminals (1) seitlich neben dem Interaktionsgerät (6) angeordnet.

## Beschreibung

Die Erfindung betrifft ein Selbstbedienungsterminal zur Erfassung von Daten von zu kontrollierenden Personen sowie eine Verwendung dieses Selbstbedienungsterminals. Das Selbstbedienungsterminal umfasst ein Kamerasystem, wobei das Kamerasystem ein höhenvariables Modul umfasst, wobei das höhenvariable Modul wenigstens eine Kamera aufweist. Das höhenvariable Modul ist entlang einer Strecke in Höhenrichtung variabel, so dass das höhenvariable Modul bzw. die wenigstens eine Kamera bzw. das Kamerasystem aus verschiedenen Höhen heraus Gesichtsbilder von zu kontrollierenden Personen aufnehmen kann. Das Selbstbedienungsterminal umfasst ein Interaktionsgerät, wobei das Interaktionsgerät zur Eingabe von Daten durch eine zu kontrollierende Person und/oder zum Ausgeben von Hinweisen an die zu kontrollierende Person ausgebildet ist.

Ein derartiges Selbstbedienungsterminal ist aus der Praxis bekannt und umfasst ein automatisch höhenverfahrbares Modul sowie ein Interaktionsgerät mit einem Touchscreen. Das höhenverfahrbare Modul befindet sich hinter einem sich in Höhenrichtung erstreckenden Fenster, welches das höhenverfahrbare Modul schützt. Der Touchscreen ist direkt unterhalb des Fensters auf Arbeitshöhe angeordnet, etwas geneigt ausgerichtet und weicht von der Waagerechten in einer Seitenansicht des Selbstbedienungsterminals um etwa 25° ab. Das höhenverfahrbare Modul weist eine Kamera sowie einen Bildschirm auf, wobei sich die Höhenposition der Kamera an der Höhe des Augenpaares einer davor stehenden bzw. zu kontrollierenden Person orientiert. Der Bildschirm gibt ein Gesichtsbild der vor dem Selbstbedienungsterminal stehenden Person wieder. Das aus der Praxis bekannte Selbstbedienungsterminal umfasst ferner ein Lesegerät zum Auslesen von Ausweisdokumenten sowie einen Scanner zum Erfassen von Fingerabdrücken.

Das aus der Praxis bekannte Selbstbedienungsterminal dient dazu, eine Grenzkontrolle einer zu kontrollierenden Personen vorzubereiten. Hierzu ist das Selbstbedienungsterminal bezüglich eines Passagierstroms an einem Flughafen vor einem Grenzkontrollschalter aufgestellt. Eine zu kontrollierende Person nähert sich dem Selbstbedienungsterminal beispielsweise mittels entsprechender Hinweisschilder bzw. Wegmarkierungen und erreicht eine Position unmittelbar vor dem Selbstbedienungsterminal. Daraufhin kann die zu kontrollierende Person bzw. der Passagier nach Aufforderung durch den Touchscreen ein Ausweisdokument, beispielsweise einen Reisepass, in einen Schacht des Lesegeräts legen. In der Folge wird der Reisepass ausgelesen, wobei insbesondere das auf dem Reisepass aufgedruckte bzw. in dem Reisepass gespeicherte Passbild ausgelesen wird. Vorzugsweise wird die zu kontrollierende Person bzw. der Passagier außerdem aufgefordert, einen bzw. mehrere Finger auf einen Fingerabdruckscanner zu legen, woraufhin ein Fingerabdruck dieser Person erfasst wird. Zusätzlich wird das höhenverfahrbare Modul mit der Kamera etwa auf die Höhe des Augenpaares der zu kontrollierenden Person verfahren, worauf hin ein Live-Gesichtsbild aufgenommen und auf dem Bildschirm des höhenverfahrbaren Moduls wiedergegeben wird.

Der Touchscreen des bekannten Selbstbedienungsterminals führt die zu kontrollierende Person durch den Prozess am Selbstbedienungsterminal. Insbesondere wird der zu kontrollierenden Person zunächst eine Sprachauswahl angeboten, woraufhin die zu kontrollierende Person nacheinander durch die drei bereits erwähnten Interaktionen (Auslesen des Ausweisdokuments, Aufnahme des Live-Gesichtsbilds, Erfassen des Fingerabdrucks) geführt wird. Zum Schluss wird die zu kontrollierende Person per Touchscreen gebeten, einen Reisezweck anzugeben.

Die ausgelesenen bzw. erfassten Daten werden danach an einen zuständigen, von einem Grenzkontrollbeamten besetzten Grenzkontrollschalter übermittelt. Die zu kontrollierende Person wird per Hinweis auf dem Touchscreen aufgefordert, sich zu diesem Grenzkontrollschalter zu begeben. Zweckmäßigerweise findet im Hintergrund ein Abgleich der ausgelesenen bzw. erfassten Daten der zu kontrollierenden Person mit einer hoheitlichen Datenbank statt, sodass dem Grenzkontrollbeamten sämtliche, für seine Entscheidung erforderliche Informationen bereits vorliegen, wenn die zu kontrollierende Person sich dem Grenzkontrolleschalter nähert.

Allerdings wurde gefunden, dass das aus der Praxis bekannte Selbstbedienungsterminal noch relativ sperrig bzw. nur bedingt barrierefrei ausgestaltet ist. Der Erfindung liegt daher die Aufgabe zugrunde, ein besonders kompaktes und nichtsdestotrotz funktionales und insbesondere barrierefreies Selbstbedienungsterminal bereitzustellen.

Diese Aufgabe wird gelöst durch ein Selbstbedienungsterminal zur Erfassung von Daten von zu kontrollierenden Personen, wobei das Selbstbedienungsterminal ein Kamerasystem aufweist, wobei das Kamerasystem ein höhenvariables Modul umfasst, wobei das höhenvariable Modul wenigstens eine Kamera aufweist, wobei das höhenvariable Modul entlang einer Strecke in Höhenrichtung variabel ist, so dass das höhenvariable Modul bzw. die wenigstens eine Kamera bzw. das Kamerasystem aus verschiedenen Höhen heraus Gesichtsbilder von zu kontrollierenden Personen aufnehmen kann, wobei das Selbstbedienungsterminal ein Interaktionsgerät aufweist, wobei das Interaktionsgerät zur Eingabe von Daten durch eine zu kontrollierende Person und/oder zum Ausgeben von Daten an die zu kontrollierende Person ausgebildet ist, dadurch gekennzeichnet, dass die Strecke des höhenvariablen Moduls - vorzugsweise wenigstens abschnittsweise in Höhenrichtung - in einer Vorderansicht des Selbstbedienungsterminals seitlich neben dem Interaktionsgerät angeordnet ist.

Der Erfindung liegt die Erkenntnis zugrunde, dass Rollstuhlfahrer das auf Arbeitshöhe angeordneten Interaktionsgerät des aus der Praxis bekannten Selbstbedienungsterminals zwar nutzen können, was jedoch verhältnismäßig unkomfortabel ist. Noch schwieriger ist die Aufnahme eines Gesichtsbildes, wozu sich ein Rollstuhlfahrer mit den Armen hochstemmen muss, um die niedrigste Höhe des höhenvariablen Moduls zu erreichen. Es wurde gefunden, dass die Höhe des bekannten Interaktionsgeräts bzw. des bekannten Touchscreens zwar grundsätzlich auf eine für Rollstuhlfahrer komfortable Höhe verringert werden kann, so dass auch die Minimalhöhe des höhenvariablen Moduls in gleichem Maße verringert werden kann. Dann allerdings ist das Interaktionsgerät für die meisten Nutzer zu weit unten angeordnet und für diese Mehrzahl an Nutzern unkomfortabel.

Der Erfindung liegt insbesondere die Erkenntnis zugrunde, dass das Interaktionsgerät und das höhenvariable Modul hinsichtlich ihrer jeweiligen Höhenanordnung baulich zu entkoppeln sind, um ein für alle Nutzergruppen komfortables Selbstbedienungsterminal zu schaffen. Durch die seitliche Anordnung werden das Interaktionsgerät und das höhenvariable Modul hinsichtlich ihrer Höhenanordnung voneinander entkoppelt, so dass sich das Interaktionsgerät und das höhenvariable Modul in Höhenrichtung wenigstens abschnittsweise überlappen. Hierdurch kann einerseits eine Minimalhöhenposition mh des höhenvariablen Moduls deutlich verringert werden. Andererseits kann das Interaktionsgerät aufrechter ausgerichtet werden und/oder sich weiter nach oben erstrecken, wodurch das Interaktionsgerät für kleinere wie auch für größere Nutzergruppen komfortabel bedienbar ist. Im Ergebnis ist das Selbstbedienungsterminal barrierefrei gestaltet und die eingangs genannte Aufgabe gelöst.

Der Ausdruck "Selbstbedienungsterminal" meint vorzugsweise, dass das Selbstbedienungsterminal ausgebildet ist, einem Nutzer bzw. einer Person bzw. einer zu kontrollierenden Person einen Service anzubieten. Der Begriff "Selbstbedienungsterminal" meint bevorzugt ein elektronisches Gerät, welches vorteilhafterweise als Standgerät und/oder Hängegerät ausgebildet ist. Das Selbstbedienungsterminal ist mit Vorteil so ausgebildet, dass er freistehend auf einem Fußboden und vorzugsweise lediglich auf einem Fußboden installierbar bzw. aufstellbar ist. Es ist bevorzugt, dass eine Gesamthöhe des Selbstbedienungsterminals größer bzw. 1,5-fach bzw. 2,0-fach bzw. 2,5-fach größer ist als eine Gesamtbreite des Selbstbedienungsterminals und/oder als eine die Gesamttiefe des Selbstbedienungsterminals.

Der Begriff "Vorderansicht" meint vorzugsweise eine Ansicht des Selbstbedienungsterminals mit einer Blickrichtung senkrecht zur Öffnung bzw. parallel zu einer optischen Achse der Kamera, so dass zweckmäßigerweise eine Vorderseite des Selbstbedienungsterminals bzw. die Kamera bzw. das höhenvariable Modul bzw. eine/die Öffnung bzw. eine/die Beleuchtungsvorrichtung sichtbar ist. Der Ausdruck "Seitenansicht" meint vorzugsweise eine Blickrichtung senkrecht zu der Vorderansicht. Zweckmäßigerweise sind in einer Seitenansicht eine Gesamthöhe H des Selbstbedienungsterminals und eine Gesamttiefe des Selbstbedienungsterminals erkennbar. Mit Vorteil sind in der Vorderansicht eine Gesamthöhe des Selbstbedienungsterminals sowie eine Gesamtbreite des Selbstbedienungsterminals erkennbar. Zweckmäßigerweise sind in einer Draufsicht eine Gesamtbreite sowie eine Gesamttiefe des Selbstbedienungsterminals erkennbar.

Der Begriff "höhenvariabel" meint vorzugsweise die Möglichkeit der Gesichtsbildaufnahme aus verschiedenen Höhen heraus. Das höhenvariable Modul ist vorzugsweise ein höhenverfahrbares Modul, welches entlang eines Verfahrwegs in Höhenrichtung verfahrbar ist. Das höhenverfahrbare Modul ist zweckmäßigerweise auf wenigstens einer Führungsschiene verfahrbar gelagert. Hierdurch kann die Zahl der Kameras bzw. Sensoren des höhenvariablen Moduls gering gehalten werden. Die Strecke des höhenverfahrbaren Moduls wird zweckmäßigerweise durch den Verfahrweg bzw. durch eine höchste Position und eine niedrigste Position der Kamera des verfahrbaren Moduls bestimmt bzw. mitbestimmt.

Das höhenvariable Modul kann eine Mehrzahl von Kameras in unterschiedlichen Höhenpositionen aufweisen, so dass das höhenvariable Modul bzw. das Kamerasystem aus verschiedenen Höhen heraus - insbesondere frontale bzw. biometrisch zulässige - Gesichtsbilder von zu kontrollierenden Personen aufnehmen kann. Hierdurch bedarf es keines verfahrbaren Moduls und keiner Führungsschiene. Die Strecke des höhenvariablen Moduls mit einer Mehrzahl von Kameras in unterschiedlichen Höhenpositionen wird zweckmäßigerweise durch die Distanz in Höhenrichtung zwischen einer am höchsten und einer am niedrigsten angeordneten Kamera mitbestimmt.

Das Interaktionsgerät umfasst vorzugsweise einen Bildschirm, wobei der Bildschirm besonders vorzugsweise als Touchscreen ausgebildet ist. Das Interaktionsgerät bzw. der Bildschirm bzw. der Touchscreen weist bevorzugt eine Bedienoberfläche und/oder eine Bildschirmoberfläche auf. Das Interaktionsgerät umfasst mit Vorteil einen Prozessor und/oder einen Speicher und/oder ein Betriebssystem. Das Interaktionsgerät ist vorteilhafterweise als Tablet und insbesondere als nicht-mobiles Tablet ausgebildet. Es ist besonders bevorzugt, dass das Interaktionsgerät in dem Selbstbedienungsterminal bzw. einem/dem Unterbau verbaut und insbesondere in dem Selbstbedienungsterminal/Unterbau versenkt ist, so dass für zu kontrollierende Personen mit Vorteil lediglich eine Bedienoberfläche und/oder Bildschirmoberfläche zugänglich ist.

Der Ausdruck "seitlich neben" meint vorzugsweise, dass sich eine Höhenausdehnung des Interaktionsgeräts bzw. des Touchscreens bzw. des Tablets bzw. der Bedienoberfläche bzw. der Bildschirmoberfläche wenigstens abschnittsweise in Höhenrichtung mit einer Höhenausdehnung der Strecke des höhenvariablen Moduls in einem überlappenden Höhenabschnitt überlappt. Vorteilhafterweise wird der sich überlappenden Höhenabschnitt der Strecke des höhenvariablen Moduls in einer Vorderansicht nicht von dem Interaktionsgerät verdeckt. Es ist sehr bevorzugt, dass in einer Vorderansicht das Interaktionsgerät bzw. der Touchscreen bzw. die Bedienoberfläche bzw. die Bildschirmoberfläche - vorzugsweise wenigstens abschnittsweise in Höhenrichtung - seitlich rechts neben dem Kamerasystem bzw. einem/dem Gehäuse des Kamerasystems bzw. der Strecke des höhenvariablen Moduls bzw. einer/der Öffnung des Kamerasystems angeordnet ist.

Gemäß einer sehr bevorzugten Ausführungsform schließt das Interaktionsgerät bzw. eine schräg nach oben verlaufende Seitenkante des Interaktionsgeräts bzw. Touchscreens bzw. Tablets bzw. der Bedienoberfläche bzw. der Bildschirmoberfläche in einer Seitenansicht relativ zu einer Waagerechten einen Neigungswinkel α von wenigstens 30° bzw. 40° bzw. 50° bzw. 60° bzw. 65° ein. Der Neigungswinkel α wird zweckmäßigerweise nach unten hin von der Waagerechten und nach oben hin von dem Interaktionsgerät bzw. der schräg nach oben der verlaufenden Seitenkante des Interaktionsgeräts bzw. Touchscreens bzw. Tablets bzw. der Bedienoberfläche bzw. der Bildschirmoberfläche eingerahmt. Mit Vorteil beläuft sich der Neigungswinkel α auf höchstens 85° bzw. 80° bzw. 75°.

Es ist sehr bevorzugt, dass das Interaktionsgerät bzw. der Touchscreen bzw. die Bedienoberfläche bzw. die Bildschirmoberfläche eine Höhenausdehnung L von wenigstens 15 bzw. 20 bzw. 25 bzw. 30 bzw. 35 cm einnimmt. Dies bewirkt, dass das Interaktionsgerät barrierefrei und gleichzeitig gut für große Personen bedienbar ist. Der Begriff "Höhenausdehnung" meint vorzugsweise eine Abbildung der schräg nach oben verlaufenden Seitenkante des Interaktionsgeräts bzw. Touchscreens bzw. der Bedienoberfläche bzw. der Bildschirmoberfläche in eine reine, in Höhenrichtung verlaufende Ausdehnung bzw. senkrecht verlaufende Ausdehnung. Es ist bevorzugt, dass eine untere Kante des Interaktionsgeräts bzw. Touchscreens bzw. der Bildschirmoberfläche bzw. der Bedienoberfläche wenigstens abschnittsweise in einer Höhe von wenigstens 70 bzw. 80 bzw. 90 bzw. 95 cm verläuft. Mit Vorteil verläuft die untere Kante des Interaktionsgeräts bzw. des Touchscreens bzw. der Bedienoberfläche bzw. des Bildschirmoberfläche wenigstens abschnittsweise in einer Höhe von höchstens 120 bzw. 115 bzw. 110 cm.

Gemäß einer sehr bevorzugten Ausführungsform schließen eine Flächennormale N des Interaktionsgeräts bzw. Touchscreens bzw. der Bedienoberfläche bzw. der Bildschirmoberfläche und eine optische Achse A der Kamera in einer Draufsicht des Selbstbedienungsterminals einen Drehwinkel β von höchstens 70° bzw. 50° bzw. 30° bzw. 20° bzw. 10° bzw. 5° ein. Dies bewirkt, dass das höhenvariable Modul bzw. die Kamera bzw. das Interaktionsgerät einer zu kontrollierenden Person zugewandt sind. Mit Vorteil beläuft sich der Drehwinkel β auf wenigstens -90° bzw. -60° bzw. -30° bzw. -20° bzw. -10°.

Vorzugsweise definiert das Kamerasystem bzw. das höhenvariable Modul eine Höhe einer Minimalhöhenposition mh der Kamera bzw. einer optischen Achse A der Kamera, wobei die Höhe der Minimalhöhenposition relativ zu einem Fußboden bevorzugt höchstens 120 bzw. 110 bzw. 100 cm beträgt. Dies bewirkt, dass auch sehr kleine Personen bzw. Rollstuhlfahrer von der Kamera gut erfasst werden können. Vorzugsweise beläuft sich die Minimalhöhenposition mh relativ zu einem Fußboden auf wenigstens 50 bzw. 70 bzw. 80 bzw. 90 cm. Hierdurch wird eine möglichst kurze Strecke des höhenvariablen Moduls erzielt, so dass sich das Kamerasystem aufwandsarm herstellen lässt.

Es ist sehr bevorzugt, dass das Kamerasystem ein Gehäuse aufweist, wobei das Gehäuse das höhenvariable bzw. höhenverfahrbare Modul einhaust, wobei das höhenvariable bzw. höhenverfahrbare Modul vorzugsweise relativ zu dem Gehäuse höhenvariabel bzw. höhenverfahrbar ist. Dies ermöglicht die vollständige Einhausung aller beweglichen bzw. optischen Teile innerhalb des Kamerasystems, wodurch die Mechanik des Kamerasystems erstens wartungsarm ist und zweitens kein Sicherheitsrisiko für insbesondere Kinder darstellt. Es ist sehr bevorzugt, dass das Kamerasystem eine Öffnung umfasst. Die Öffnung ist vorzugsweise einer Vorderseite des Kamerasystems zugeordnet. Es ist sehr bevorzugt, dass die Öffnung mittels eines transparenten Elements, insbesondere mittels einer Scheibe, wenigstens abschnittsweise abgedeckt ist. Es ist sehr bevorzugt, dass das transparente Element einen Kunststoff und/oder ein Glas umfasst. Das transparente Element schützt zweckmäßigerweise das Innenleben des Kamerasystems.

Vorteilhafterweise ist das höhenvariable bzw. höhenverfahrbare Modul entlang der Öffnung bzw. entlang des transparenten Elements verfahrbar. Es ist sehr von Vorteil, dass das transparente Element bzw. die Öffnung sich mit einer Längsausdehnung in Höhenrichtung erstreckt. Es ist bevorzugt, dass das Gehäuse des Kamerasystems entlang wenigstens eines Abschnitts in Höhenrichtung ein konstantes Querschnittsprofil - allenfalls von Ausnehmungen bzw. Bohrungen in der Gehäusewand abgesehen - aufweist. Es ist sehr bevorzugt, dass ein Querschnittsprofil des Gehäuses des Kamerasystems wenigstens entlang von 50 % bzw. 70 % bzw. 90 % der Gesamthöhe des Selbstbedienungsterminals konstant ist.

Vorzugsweise ist unterhalb des Interaktionsgeräts bzw. Touchscreens bzw. der Bedienoberfläche bzw. der Bildschirmoberfläche ein Unterbau angeordnet. Mit Vorteil ist/sind das Interaktionsgerät und/oder der Unterbau baulich mit dem Kamerasystem verbunden. Dies bewirkt eine Kompaktheit des Selbstbedienungsterminals bzw. eine Stabilität des Selbstbedienungsterminals. Hierdurch kann das Selbstbedienungsterminal leichter umgestellt werden, so dass das Selbstbedienungsterminal auch Flexibilitätsansprüchen gerecht wird. Insbesondere ist es möglich, das Kamerasystem und das Interaktionsgerät ab Werk miteinander zu verbinden, so dass die Installation vor Ort, beispielsweise in einem Flughafen, besonders zügig vonstattengehen kann.

Es ist von Vorteil, dass der Unterbau ein Gehäuse umfasst. Das Gehäuse des Unterbaus ist vorzugsweise mit dem Gehäuse des Kamerasystems, beispielsweise mittels Schraubverbindungen, verbunden. Mit Vorteil befindet sich eine höchste Verbindungsstelle zwischen dem Unterbau bzw. dem Gehäuse des Unterbaus und dem Kamerasystem bzw. dem Gehäuse des Kamerasystems innerhalb der unteren 2/3 bzw. innerhalb der unteren Hälfte der Gesamthöhe des Selbstbedienungsterminals. Es ist bevorzugt, dass das Gehäuse des Kamerasystems und das Gehäuse des Unterbaus jeweils einen eigenen Hohlraum definieren, wobei die beiden Hohlräume höchstens über miteinander fluchtende Bohrungen bzw. Ausnehmungen in dem Gehäuse des Kamerasystems und in dem Gehäuse des Unterbaus miteinander verbunden sind. Das Gehäuse des Unterbaus haust zweckmäßigerweise elektrische bzw. elektronische Komponenten ein. Die elektrischen bzw. elektronischen Komponenten sind bevorzugt mit dem Interaktionsgerät bzw. Bildschirm bzw. Touchscreen und/oder mit dem Lesegerät und/oder einem/dem Fingerabdruckscanner verbunden.

Es ist sehr bevorzugt, dass das Selbstbedienungsterminal einen Fuß aufweist, wobei das Kamerasystem und/oder der Unterbau vorzugsweise auf dem Fuß montiert ist/sind. Dies bewirkt eine Stabilität, so dass das Selbstbedienungsterminal im Ganzen transportiert bzw. bewegt werden kann, wodurch insbesondere ein Umstellen des Selbstbedienungsterminals erleichtert wird. Der Fuß ist vorzugsweise einstückig und insbesondere integral ausgebildet. Mit Vorteil ist der Fuß als Platte bzw. als Metallplatte bzw. als Stahlplatte ausgestaltet. Es sehr bevorzugt, dass das Gehäuse des Unterbaus - vorzugsweise unmittelbar - auf dem Fuß montiert ist. Es ist sehr bevorzugt, dass das Gehäuse des Kamerasystems - vorzugsweise mittelbar - auf dem Fuß montiert ist.

Es ist bevorzugt, dass das höhenvariable bzw. höhenverfahrbare Modul einen Bildschirm umfasst. Der Bildschirm bzw. das höhenvariable bzw. höhenverfahrbare Modul bzw. die Kamera bzw. das Kamerasystem ist vorzugsweise ausgebildet, ein mit der Kamera aufgenommenes Gesichtsbild - insbesondere Live-Gesichtsbild - einer zu kontrollierenden Person wiederzugeben. Dies erlaubt eine schnelle Überprüfbarkeit der Bildaufnahme durch den Nutzer sowie Anweisungen an den Nutzer auf dem Bildschirm, wodurch der Nutzer sich in der Tendenz etwas rascher gegenüber dem Selbstbedienungsterminal bzw. dem Kamerasystem konform verhält. Dies erhöht insbesondere den Durchsatz des Selbstbedienungsterminals.

Gemäß einer vorteilhaften Ausführungsform umfasst das Selbstbedienungsterminal ein Lesegerät zum Auslesen von physischen und/oder elektronischen Dokumenten - insbesondere von Identitäts- bzw. Ausweisdokumenten. Das Lesegerät ist vorzugweise ausgebildet, ein physisches Ausweisdokument per Funk und/oder optisch auszulesen. Das Lesegerät ist mit Vorteil ausgebildet, ein elektronisches Ausweisdokument, insbesondere Digital Travel Credentials (DTC), auszulesen, wobei das elektronische Dokument auf einem elektronischen Endgerät, z.B. einem Smartphone, gespeichert sein kann. Das Lesegerät ermöglicht die Erfassung von Ausweisdaten und in der Folge einen größeren Durchsatz an einer Kontrollstelle oder an einer Erfassungsstelle.

Mit Vorteil weist das Selbstbedienungsterminal einen Fingerabdruckscanner auf. Dies erlaubt das Erfassen von Fingerabdrücken, welche vorzugsweise gemeinsam mit anderen Daten - insbesondere mit Ausweisdaten und/oder mit dem aufgenommenen Gesichtsbild - an einen Kontrollschalter weitergeleitet werden können. Hierdurch kann ein größerer Durchsatz am Kontrollschalter erreicht werden.

Vorzugsweise umfasst das Selbstbedienungsterminal eine Überwachungskamera. Dies erlaubt insbesondere das Aufdecken von Betrugsversuchen an dem Selbstbedienungsterminal und unterbindet von vornherein zahlreiche Betrugsversuche. Es ist bevorzugt, dass das Selbstbedienungsterminal eine Betriebsanzeige und/oder eine Lesegerät-Anzeige und/oder eine Scanner-Anzeige aufweist. Die Betriebsanzeige ist vorzugsweise ausgebildet, einen Betriebszustand von einem Zustand "außer Betrieb" zu unterscheiden. Dies erlaubt eine bessere Steuerung von Strömen von zu kontrollierenden Personen und erhöht den Durchsatz. Die Lesegerät-Anzeige und/oder die Scanner-Anzeige sind vorzugsweise ausgebildet, ein Verhalten einer zu kontrollierenden Person zu beeinflussen. Beispielsweise kann die Lesegerät-Anzeige ausgebildet sein, eine zu kontrollierende Person dahingehend zu dirigieren, ihren Pass an eine durch die Lesegerät-Anzeige angezeigte Stelle zu legen. Hierdurch wird das Verhalten von zu kontrollierenden Personen an dem Selbstbedienungsterminal im Sinne einer schnelleren Handhabung beeinflusst. Im Ergebnis wird Durchsatz an dem Selbstbedienungsterminal erhöht.

Mit Vorteil umfasst das Selbstbedienungsterminal eine Beleuchtungsvorrichtung. Die Beleuchtungsvorrichtung ist vorzugsweise ausgebildet, bei schlechten vorherrschenden Lichtverhältnissen bessere Lichtverhältnisse wenigstens im Moment der Aufnahme durch die Kamera zu schaffen. Die Beleuchtungsvorrichtung ist vorzugsweise länglich ausgebildet und erstreckt sich zweckmäßigerweise mit ihrer Längsausdehnung in Höhenrichtung. Es ist bevorzugt, dass sich die Beleuchtungsvorrichtung parallel zu der Öffnung bzw. der Strecke des höhenvariablen Moduls erstreckt. Es sehr bevorzugt, dass die Beleuchtungsvorrichtung beidseitig der Öffnung bzw. des höhenvariablen Moduls angeordnet ist. Es ist vorteilhaft, dass das Kamerasystem die Beleuchtungsvorrichtung umfasst. Mit Vorteil ist die Beleuchtungsvorrichtung in das Gehäuse des Kamerasystems wenigstens teilweise eingelassen. Die Beleuchtungsvorrichtung umfasst vorzugsweise eine Mehrzahl an Leuchtdioden.

Die eingangs genannte Aufgabe wird gelöst durch eine Verwendung eines Selbstbedienungsterminals - insbesondere eines erfindungsgemäßen Selbstbedienungsterminals - als vorbereitende Station für eine Entscheidungsstelle, insbesondere für einen Entscheidungsschalter, insbesondere für einen mit einer diensthabenden Person besetzten Entscheidungsschalter, wobei der Entscheidungsschalter vorzugsweise ein Kontrollschalter und insbesondere ein Grenzkontrollschalter ist, wobei die Entscheidungsstelle vorzugsweise innerhalb eines Flughafens angeordnet ist. Vorteilhafterweise ist das Selbstbedienungsterminal ausgebildet ist, eine zu kontrollierende Person und/oder Daten der zu kontrollierenden Person an die Entscheidungsstelle weiterzuleiten, wobei das Selbstbedienungsterminal von der Entscheidungsstelle bevorzugt wenigstens 5 bzw. 10 bzw. 15 m entfernt ist. Dies bewirkt eine bessere Vorbereitung für einen Prüfprozess an der Entscheidungsstelle, so dass ein größerer Durchsatz an der Entscheidungsstelle erreichbar ist. Hintergrund ist, dass die Zahl der Selbstbedienungsterminals leichter skalierbar ist als die Zahl der Entscheidungsstellen bzw. Entscheidungsschalter, da letztere personell begrenzt sind und innerhalb der Ströme von zu kontrollierenden Personen häufig einen Engpass darstellen.

Gemäß einer Ausführungsform ist das Selbstbedienungsterminal bzw. die Entscheidungsstelle in einer ausstellenden Behörde angeordnet bzw. einer ausstellenden Behörde zugeordnet. Die Entscheidungsstelle ist bevorzugt ausgebildet, von dem Selbstbedienungsterminal erfasste Daten aufbereitet wiederzugeben und beispielsweise zur Ausstellung von Identitäts- bzw.-Ausweisdokumenten an eine für die Produktion dieser Dokumente zuständige Behörde weiterzuleiten.

Nachfolgend wird anhand eines Ausführungsbeispiels der Erfindung mithilfe von sechs Figuren die Erfindung erläutert. Es zeigen in schematischer Darstellung:
- Fig. 1: eine perspektivische Vorderansicht eines erfindungsgemäßen Selbstbedienungsterminals,
- Fig. 2: eine perspektivische Seitenansicht des Selbstbedienungsterminals aus Fig. 1 mit einer ersten, zu kontrollierenden Person,
- Fig.3: die perspektivische Seitenansicht aus Fig. 2 mit einer zweiten, zu kontrollierenden Person,
- Fig 4A: eine symbolisch gehaltene Draufsicht eines Selbstbedienungsterminals mit einem ersten Drehwinkel β,
- Fig. 4B: die Draufsicht aus Fig. 4A mit einem zweiten Drehwinkel β und
- Fig. 4C: die Draufsicht aus Fig. 4A mit einem dritten Drehwinkel β.

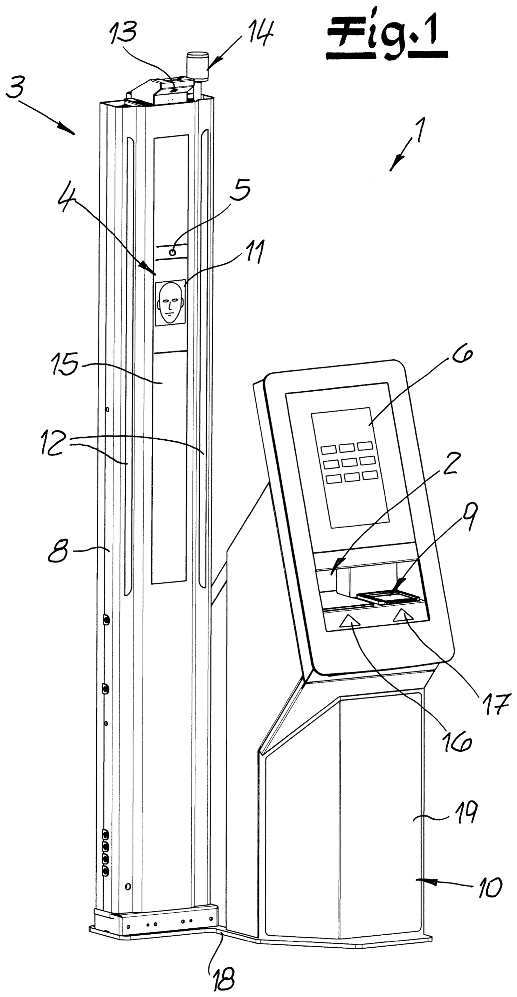

Die perspektivische Vorderansicht nach Fig. 1 zeigt ein erfindungsgemäßes Ausführungsbeispiel eines Selbstbedienungsterminals 1 zur Kontrolle von zu kontrollierenden Personen. Das Selbstbedienungsterminal 1 umfasst ein Kamerasystem 3, ein Interaktionsgerät 6 sowie ein Lesegerät 2 zum Auslesen von Ausweisdokumenten. Das Interaktionsgerät 6 dieses Ausführungsbeispiels ist als nicht-mobiles Tablet mit einer Bedienoberfläche bzw. einer Bildschirmoberfläche bzw. einem Touchscreen ausgebildet. Das Lesegerät 2 ist bevorzugt ausgebildet, ein Ausweisdokument, beispielsweise einen Personalausweis und/oder einen Reisepass, optisch und/oder mittels Funk - beispielsweise mittels Radio-Frequency Identification (RFID), Near Field Communication (NFC) und/oder Bluetooth bzw. Bluetooth Low Energy (BLE) - auszulesen. Ganz besonders vorzugsweise liest das Lesegerät 2 ein elektronisch gespeichertes Ausweisgesichtsbild aus dem Ausweisdokument aus.

Bei diesem Ausführungsbeispiel ist das Selbstbedienungsterminal 1 vorzugsweise einem hier nicht dargestellten Kontrollschalter und insbesondere Grenzkontrollschalter - vorzugsweise eines Flughafens - vorgeschaltet. Mit Vorteil wird ein Passagierstrom des Flughafens zunächst an das Selbstbedienungsterminal 1 bzw. an eine Mehrzahl von Selbstbedienungsterminals 1 herangeführt, woraufhin der Passagierstrom dann zu einem Kontrollschalter/Grenzkontrollschalter bzw. einer Mehrzahl an Kontrollschaltern/Grenzkontrollschaltern geführt wird.

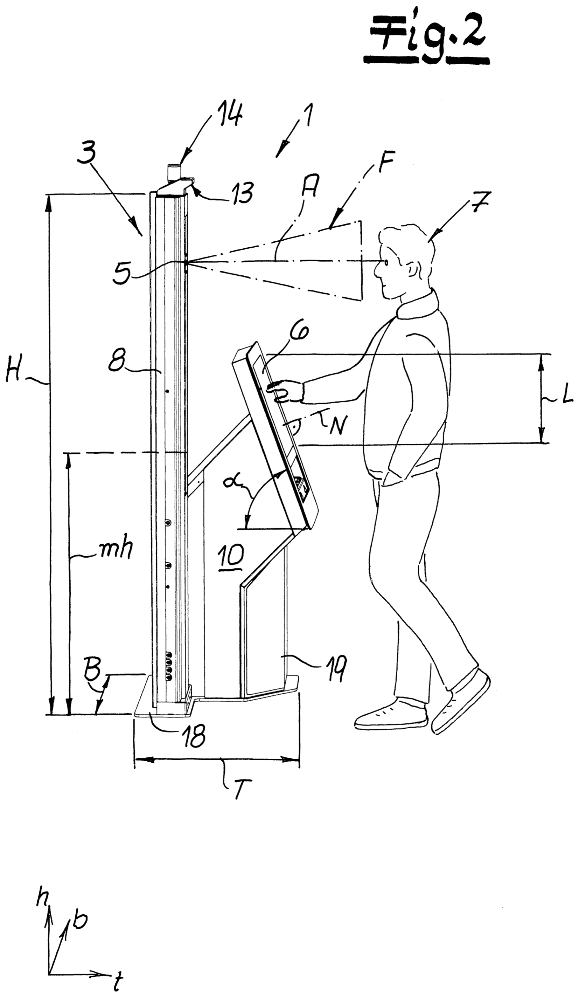

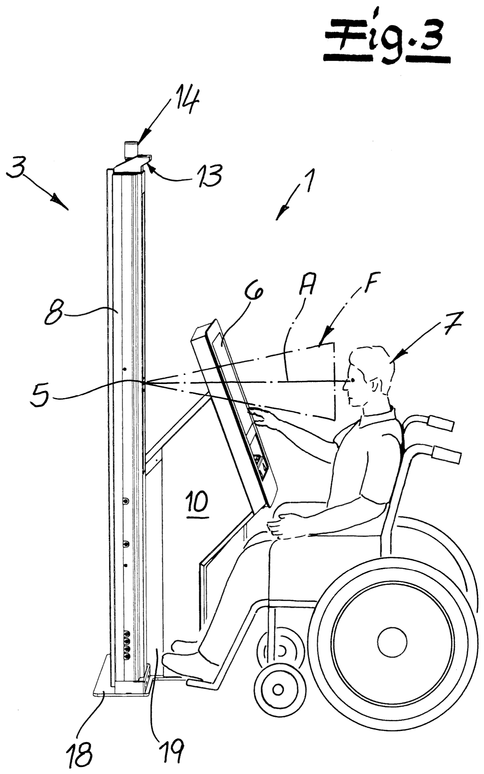

Das Kamerasystem 3 weist gemäß Fig. 1 ein höhenvariables Modul 4 auf, welches vorzugsweise automatisch in eine Höhe eines Gesichtes einer zu kontrollierenden Person 7 (vgl. Fig. 2 und 3) verfahren wird. Das höhenvariable Modul 4 umfasst eine Kamera 5 zur Aufnahme eines Gesichtsbildes der zu kontrollierenden Person 7. Mit Vorteil weist das höhenvariable Modul 4 einen Bildschirm 11 auf, welcher vorzugsweise ein mit der Kamera 5 aufgenommenes Gesichtsbild - insbesondere Live-Gesichtsbild - wiedergibt bzw. wiedergeben kann.

Vorzugsweise umfasst nach Fig. 1 das Kamerasystem 3 eine Beleuchtungsvorrichtung 12 zur Beleuchtung eines Gesichtes der zu kontrollierenden Person 7 in dem Moment einer Aufnahme eines Gesichtsbildes. Die Beleuchtungsvorrichtung 12 ist insbesondere ausgebildet, sich automatisch an die vorherrschenden Lichtverhältnisse am Selbstbedienungsterminal 1 anzupassen, so dass in einem Moment der Aufnahme des Gesichtsbildes der zu kontrollierenden Person 7 verbesserte Lichtverhältnisse vorliegen.

Das Kamerasystem 3 umfasst zweckmäßigerweise ein Gehäuse 8, s. Fig. 1. Das Gehäuse 8 haust mit Vorteil das höhenvariable Modul 4 ein, wobei das höhenvariable Modul 4 vorzugsweise relativ zum Gehäuse 8 höhenverfahrbar innerhalb des Gehäuses 8 ist. Das Kamerasystem 3 weist vorzugsweise eine Öffnung 15 auf. Die Öffnung 15 erstreckt sich mit Vorteil bezüglich ihrer Längsausdehnung in Höhenrichtung. Es ist bevorzugt, dass ein transparentes Element, insbesondere eine transparente Scheibe die Öffnung 15 wenigstens teilweise und vorzugsweise vollständig abdeckt. Mit Vorteil umfasst das Kamerasystem 3 wenigstens eine Führungsschiene und vorzugsweise zwei Führungsschienen. Es ist bevorzugt, dass das höhenvariable Modul 4 in Höhenrichtung h gleitend auf der wenigstens einen Führungsschiene gelagert ist.

Vorzugsweise umfasst gemäß Fig. 1 das Kamerasystem 3 eine Überwachungskamera 13. Die Überwachungskamera 13 ist mit Vorteil in einem oberen Drittel bzw. Viertel bzw. Fünftel des Kamerasystems 3 angeordnet. Besonders vorzugsweise überragt die Überwachungskamera 13 in Höhenrichtung h das Gehäuse 8 bzw. die wenigstens eine Führungsschiene bzw. die Beleuchtungsvorrichtung h 12 bzw. das höhenvariable Modul 4 in dessen höchstmöglicher Position. Die Überwachungskamera 13 ist mit Vorteil nach unten und insbesondere geneigt nach unten ausgerichtet. Die Überwachungskamera 13 überragt in einer Draufsicht des Kamerasystems 3 vorzugsweise eine Vorderseite des Kamerasystems 3 bzw. die Öffnung 15 bzw. das höhenvariable Modul 4.

Vorzugsweise umfasst das Selbstbedienungsterminal 1 eine Betriebsanzeige 14, s. Fig. 1. Die Betriebsanzeige 14 ist bevorzugt an dem Kamerasystem 3 befestigt. Mit Vorteil ist die Betriebsanzeige 14 auf dem Gehäuse 8 bzw. oberhalb des Gehäuses 8 montiert. Die Betriebsanzeige 14 ist mit Vorteil ausgebildet, wenigstens 2 Modi des Selbstbedienungsterminals 1 abzubilden. Bevorzugt unterscheidet die Betriebsanzeige 14 wenigstens zwischen einem Betriebsmodus und einem Modus, in welchem das Selbstbedienungsterminal 1 außer Betrieb ist.

Gemäß Fig. 1 umfasst das Selbstbedienungsterminal 1 vorzugsweise einen Fingerabdruckscanner 9. Der Fingerabdruckscanner 9 ist vorzugsweise dazu ausgebildet, einen Fingerabdruck einer zu kontrollierenden Person 7 zu erfassen. Vorzugsweise ist das Lesegerät 2 und/oder der Fingerabdruckscanner 9 unterhalb des Interaktionsgeräts 6 bzw. des nichtmobilen Tablets bzw. Touchscreens angeordnet. Es ist bevorzugt, dass das Lesegerät 2 und/oder der Fingerabdruckscanner 9 in einem Schacht angeordnet ist/sind. Dies ermöglicht aufgrund der geringeren, von außen einfallenden Lichtmenge bessere Bedingungen zum optischen Auslesen.

Bevorzugt umfasst das Selbstbedienungsterminal 1 eine Lesegerät-Anzeige 16 und/oder eine Scanner-Anzeige 17, s. Fig. 1. Die Lesegerät-Anzeige 16 und/oder die Scanner-Anzeige 17 sind mit Vorteil ausgebildet, wenigstens ein Signal und insbesondere wenigstens ein optisches Signal auszugeben. Es ist bevorzugt, dass die Lesegerät-Anzeige 16 bzw. das Selbstbedienungsterminal 1 ausgebildet ist, ein Anzeigesignal auszugeben, welches die zu kontrollierende Person 7 dazu verleitet, ein Ausweisdokument an das Lesegerät 2 zu halten. Es ist bevorzugt, dass die Scanner-Anzeige 17 bzw. das Selbstbedienungsterminal 1 ausgebildet ist, ein Anzeigesignal auszugeben, welches die zu kontrollierende Person 7 dazu verleitet, die Hand an den Fingerabdruckscanner 9 zu halten. Die Lesegerät-Anzeige 16 und/oder die Scanner-Anzeige 17 kann beispielsweise als pfeilartiges Element ausgestaltet sein, welches beispielsweise grün leuchtet.

Es ist von Vorteil, dass das Selbstbedienungsterminal 1 nach Fig. 1 einen Unterbau 10 umfasst. Vorzugsweise ist das Interaktionsgerät 6 und/oder das Lesegerät 2 und/oder der Fingerabdruckscanner 9 an dem Unterbau befestigt bzw. montiert. Es ist bevorzugt, dass in Höhenrichtung h wenigstens ein Abschnitt des Unterbaus 10 unterhalb des Interaktionsgeräts 6 bzw. Touchscreens bzw. des Lesegeräts 2 bzw. des Fingerabdruckscanners 9 angeordnet ist. Der Unterbau 10 umfasst vorzugsweise ein Gehäuse 19, welches bevorzugt wenigstens abschnittsweise von dem Interaktionsgerät 6 bzw. Touchscreen und/oder Lesegerät 2 und/oder dem Fingerabdruckscanner 9 abgeschlossen wird.

Vorteilhafterweise umfasst das Selbstbedienungsterminal 1 einen Fuß 18, s. Fig. 1. Vorzugsweise wird das Gehäuse 19 des Unterbaus 9 von dem Fuß 18 nach unten hin abgeschlossen. Vorteilhafterweise wird das Gehäuse 8 des Kamerasystems 3 von dem Fuß 18 nach unten hin abgeschlossen. Der Fuß 18 ist vorzugsweise einstückig und insbesondere integral ausgebildet. Der Fuß 18 ist bevorzugt als Platte, insbesondere als Metallplatte und vorzugsweise als Stahlplatte ausgebildet. Vorteilhafterweise ist das Gehäuse 19 des Unterbaus 9 und/oder das Gehäuse 8 des Kamerasystems 3 auf dem Fuß 18 montiert bzw. befestigt.

Mit Vorteil ist gemäß Fig. 1 der Unterbau 10 bzw. das Gehäuse 19 des Unterbaus 10 mit dem Kamerasystem 3 bzw. dem Gehäuse 8 des Kamerasystems 3 verbunden. Es ist sehr bevorzugt, dass das Interaktionsgerät 6 bzw. der Touchscreen in einer Vorderansicht rechts neben dem Kamerasystem 3 bzw. der Öffnung 15 angeordnet ist. Es ist bevorzugt, dass die Öffnung 15 in einer Seitenansicht gegenüber wenigstens eines Abschnitts des Interaktionsgeräts 6 bzw. Touchscreens nach hinten bzw. in die Tiefe versetzt ist. Es ist von Vorteil, dass das Gehäuse 8 des Kamerasystems 3 und das Gehäuse 19 des Unterbaus 10 jeweils einen eigenen Innenraum definieren, wobei die Innenräume vorzugsweise nicht miteinander verbunden sind.

In Fig. 2 ist eine erste, zu kontrollierende Person 7 abgebildet, welche hier als nicht beeinträchtigter Erwachsener gezeichnet ist. Aufgrund der gewählten Abmessungen des Selbstbedienungsterminals 1 kann die erste, zu kontrollierende Person 7 das Selbstbedienungsterminal 1 sehr einfach bzw. komfortabel bedienen und gleichzeitig von der Kamera 5 erfasst werden. Durch die Höhenverfahrbarkeit der Kamera 5 bzw. durch das höhenvariable Modul 4 kann sich das Kamerasystem 3 problemlos auf die sehr unterschiedlichen Körpergrößen von zu kontrollierenden Personen 7 einstellen. Insbesondere ist in Fig. 2 erkennbar, dass die erste, zu kontrollierende Person 7 das Selbstbedienungsterminal 1 bzw. das Interaktionsgerät 6 komfortabel nutzen bzw. bedienen kann. Dies ist u.a. an der entspannten Armhaltung der ersten, zu kontrollierenden Person 7 erkennbar.

In der Seitenansicht des Selbstbedienungsterminals 1 nach Fig. 2 schließt eine nach oben verlaufende Kante bzw. seitliche Seitenkante des Interaktionsgeräts 6 bzw. Touchscreens bzw. der Bedienoberfläche bzw. der Bildschirmoberfläche mit einer Waagerechten einen Neigungswinkel α ein. Der Neigungswinkel α beläuft sich mit Vorteil auf wenigstens 30° bzw. 40° bzw. 50° bzw. 60°. Vorzugsweise beläuft sich der Neigungswinkel α auf weniger als 90° bzw. 85° bzw. 80°. Es ist bevorzugt, dass eine untere Kante des Interaktionsgeräts 6 bzw. Touchscreens bzw. der Bedienoberfläche bzw. der Bildschirmoberfläche mit einer oberen Kante des Interaktionsgeräts 6 eine senkrechte Höhenausdehnung h definieren. Die Höhenausdehnung h beläuft sich mit Vorteil auf wenigstens 15 bzw. 20 bzw. 25 cm. Das Interaktionsgerät 6 bzw. der Touchscreen bzw. die Bedienoberfläche bzw. die Bildschirmoberfläche definiert vorzugsweise eine Flächennormale N, welche senkrecht auf einer Bedienoberfläche bzw. Bildschirmoberfläche des Interaktionsgeräts 6 orientiert ist.

Es ist von Vorteil, dass gemäß Fig. 2 eine Auflagefläche des Lesegeräts 2 sich relativ zum Fußboden in einer Höhe von wenigstens 60 bzw. 70 bzw. 75 cm befindet. Mit Vorteil befindet sich eine/die Auflagefläche des Lesegeräts 2 in einer Höhe relativ zum Fußboden von höchstens 100 bzw. 95 bzw. 90 cm. Es ist bevorzugt, dass sich eine untere Kante des Interaktionsgeräts 6 bzw. Touchscreens bzw. der Bedienoberfläche bzw. der Bildschirmoberfläche in einer Höhe relativ zum Fußboden von wenigstens 80 bzw. 85 bzw. 90 bzw. 95 cm befindet. Vorzugsweise befindet sich eine untere Kante des Interaktionsgeräts 6 bzw. Touchscreens bzw. der Bedienoberfläche bzw. der Bildschirmoberfläche in einer Höhe relativ zum Fußboden von höchstens 120 bzw. 115 bzw. 110 bzw. 105 cm. Es ist bevorzugt, dass sich die Öffnung 15 bis in eine Höhe von wenigstens 180 bzw. 185 bzw. 190 bzw. 195 bzw. 200 cm erstreckt.

Zweckmäßigerweise definiert das Kamerasystem 3 eine Minimalhöhenposition mh der Kamera 5 (s. Fig. 2), welche die niedrigste, für die Kamera 5 zu erreichende Aufnahmeposition darstellt. Es ist bevorzugt, dass die Minimalhöhenposition mh sich in einer Höhe von höchstens 130 bzw. 120 bzw. 110 bzw. 100 cm relativ zum Fußboden befindet. Die Kamera 5 definiert zweckmäßigerweise ein Blickfeld F und/oder eine optische Achse A. Die optische Achse A ist zweckmäßigerweise eine Mittenachse des Blickfeldes F. Es ist besonders bevorzugt, dass das Kamerasystem 3 ausgebildet ist, eine Höhenposition des Augenpaares der zu kontrollierenden Person 7 zu ermitteln. Die Ermittlung der Höhenposition des Augenpaares der zu kontrollierenden Person 7 kann beispielsweise mittels Gesichtserkennung vorgenommen werden. Vorzugsweise ist das Kamerasystem 3 ausgebildet, dass die Kamera 5 - bevorzugt automatisch - eine Höhenposition einnimmt, welche höchstens 30 bzw. 20 bzw. 10 cm nach unten bzw. oben von einer Höhenposition eines Augenpaars einer zu kontrollierenden Person 7 abweicht.

Aufgrund der gewählten Maße des Selbstbedienungsterminals 1 ist in Fig. 3 erkennbar, dass eine zweite, zu kontrollierende Person 7 im Rollstuhl problemlos sowohl das Interaktionsgerät 6 nutzen als auch ein Gesichtsbild mit der Kamera 5 von der zweiten, zu kontrollierenden Person 7 aufgenommen werden kann. In Fig. 3 (und auch in Fig. 2) ist ein Versatz des Kamerasystems 3 bzw. der Öffnung 15 in einer Tiefenrichtung t relativ zu einer oberen Kante des Interaktionsgeräts 6 bzw. Touchscreens bzw. der Bedienoberfläche bzw. der Bildschirmoberfläche abgebildet. Mit Vorteil ist die Vorderseite das Kamerasystems 3 bzw. die Öffnung 15 in einer waagerechten Richtung bzw. in Tiefenrichtung t gegenüber einer oberen Kante des Interaktionsgeräts 6 bzw. Touchscreens bzw. der Bedienoberfläche bzw. der Bildschirmoberfläche wenigstens 10 bzw. 15 bzw. 20 cm entfernt. Dieser Abstand bezieht sich vorzugsweise auf die Kante bzw. obere Kante des Touchscreens bzw. der Bedienoberfläche bzw. der Bildschirmoberfläche selbst und nicht etwa auf eine Kante eines Gehäuses des Interaktionsgeräts 6. Es ist bevorzugt, dass eine untere Kante des Interaktionsgeräts 6 bzw. Touchscreens bzw. der Bedienoberfläche bzw. der Bildschirmoberfläche in Tiefenrichtung t wenigstens 15 bzw. 20 bzw. 25 bzw. 30 cm von der Öffnung 15 entfernt ist. Der Versatz ermöglicht eine Beinfreiheit für Rollstuhlfahrer und damit die gleichzeitige Bedienung des Interaktionsgeräts 6 und der Aufnahme mit der Kamera 5.

Mit Vorteil weist das Selbstbedienungsterminal 1 gemäß Figur 2 eine Gesamthöhe H von wenigstens 180 bzw. 190 bzw. 195 bzw. 200 cm auf. Zweckmäßigerweise bezieht sich die Gesamthöhe H des Selbstbedienungsterminals 1 auf eine Höhe des Gehäuses 8 des Kamerasystems 3. Mit Vorteil bezieht sich die Gesamthöhe H des Selbstbedienungsterminals 1 auf eine Höhe des Selbstbedienungsterminals 1 unter Ausblendung der Überwachungskamera 13 und/oder der Betriebsanzeige 14. Es ist bevorzugt, dass das Selbstbedienungsterminal 1 eine Gesamtbreite B von höchstens 120 bzw. 110 bzw. 100 bzw. 90 bzw. 80 bzw. 75 cm aufweist. Vorzugsweise beläuft sich eine Gesamtbreite B des Selbstbedienungsterminals 1 auf wenigstens 30 bzw. 40 bzw. 50 bzw. 55 cm. Vorteilhafterweise beträgt eine Gesamttiefe T des Selbstbedienungsterminals 1 wenigstens 30 bzw. 40 bzw. 50 bzw. 55 cm. Es ist bevorzugt, dass das Selbstbedienungsterminal 1 eine Gesamttiefe T von höchstens 120 bzw. 110 bzw. 100 bzw. 90 bzw. 80 bzw. 75 cm aufweist.

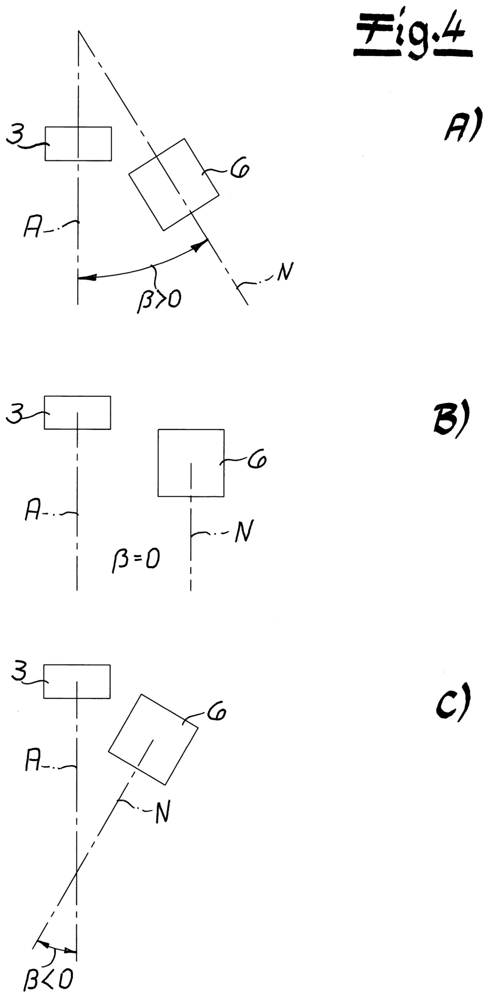

Zur komfortablen Nutzung des Selbstbedienungsterminals 1 trägt auch ein niedriger Drehwinkel β bei, welcher in den Fig. 4A bis 4C dargestellt ist. Die Fig. 4A bis 4C zeigen jeweils eine stark vereinfachte Draufsicht auf das Selbstbedienungsterminal 1 mit dem Kamerasystem 3 und dem Interaktionsgerät 6 bzw. Touchscreen bzw. mit der Bedienoberfläche bzw. Bildschirmoberfläche. Zweckmäßigerweise schließen die Flächennormale N des Interaktionsgeräts 6 und die optische Achse A der Kamera 5 in einer Draufsicht einen Drehwinkel β ein.

Im Falle der Fig. 4A ist der Drehwinkel β größer 0. Demgegenüber ist im Falle der Fig. 4B der Drehwinkel β gleich Null, so dass die optische Achse A und die Flächennormale N in einer Draufsicht zueinander parallel verlaufen. Im Falle der Fig. 4C sind das Kamerasystem 3 und das Interaktionsgerät 6 zueinander leicht eingedreht. In der Folge ist der Drehwinkel β in Fig. 4C kleiner 0. Es ist sehr bevorzugt, dass der Drehwinkel β in einer Draufsicht auf das Selbstbedienungsterminal 1 kleiner als 90° bzw. 70° bzw. 50° bzw. 30° bzw. 10° bzw. 0° ist. Es ist bevorzugt, dass der Drehwinkel β größer als -70° bzw. -50° bzw. -30° bzw. -10° ist. In dem Ausführungsbeispiel der Fig. 1 bis 3 beläuft sich der Drehwinkel β auf -5°.

### Bezugszeichenliste

- 1: Selbstbedienungsterminal
- 2: Lesegerät
- 3: Kamerasystem
- 4: Höhenvariables Modul
- 5: Kamera
- 6: Interaktionsgerät
- 7: Zu kontrollierende Person
- 8: Gehäuse von 3
- 9: Fingerabdruckscanner
- 10: Unterbau unter 6
- 11: Bildschirm von 3
- 12: Beleuchtungsvorrichtung von 3
- 13: Überwachungskamera
- 14: Betriebsanzeige
- 15: Öffnung
- 16: Lesegerät-Anzeige
- 17: Scanner-Anzeige
- 18: Fuß von 1
- 19: Gehäuse von 10
- A: Optische Achse von 5
- F: Blickfeld von 5
- N: Flächennormale von 6
- α: Neigungswinkel von 6
- β: Drehwinkel
- L: Höhenausdehnung von 6
- mh: Minimalhöhenposition von 5
- H: Gesamthöhe von 1
- T: Gesamttiefe von 1
- B: Gesamtbreite von 1
- b: Breitenrichtung
- h: Höhenrichtung
- t: Tiefenrichtung

## Patentansprüche

1. Selbstbedienungsterminal (1) zur Erfassung von Daten von zu kontrollierenden Personen (7), wobei das Selbstbedienungsterminal (1) ein Kamerasystem (3) aufweist, wobei das Kamerasystem (3) ein höhenvariables Modul (4) umfasst, wobei das höhenvariable Modul (4) wenigstens eine Kamera (5) aufweist, wobei das höhenvariable Modul (4) entlang einer Strecke in Höhenrichtung variabel ist, so dass das höhenvariable Modul (4) bzw. die wenigstens eine Kamera (5) bzw. das Kamerasystem (3) aus verschiedenen Höhen heraus Gesichtsbilder von zu kontrollierenden Personen aufnehmen kann, wobei das Selbstbedienungsterminal (1) ein Interaktionsgerät (6) aufweist, wobei das Interaktionsgerät (6) zur Eingabe von Daten durch eine zu kontrollierende Person (7) und/oder zum Ausgeben von Daten an die zu kontrollierende Person (7) ausgebildet ist,
**dadurch gekennzeichnet, dass**
die Strecke des höhenvariablen Moduls (4) - vorzugsweise wenigstens abschnittsweise in Höhenrichtung - in einer Vorderansicht des Selbstbedienungsterminals (1) seitlich neben dem Interaktionsgerät (6) angeordnet ist.

2. Selbstbedienungsterminal (1) nach Anspruch 1, wobei das Interaktionsgerät (6) bzw. eine schräg nach oben verlaufende Seitenkante des Interaktionsgeräts (6) in einer Seitenansicht des Selbstbedienungsterminals (1) relativ zu einer Waagerechten einen Neigungswinkel α von wenigstens 30° bzw. 40° bzw. 50° einschließt.

3. Selbstbedienungsterminal (1) nach einem der Ansprüche 1 oder 2, wobei das Interaktionsgerät (6) eine Höhenausdehnung L von wenigstens 15 bzw. 20 bzw. 25 cm einnimmt.

4. Selbstbedienungsterminal (1) nach einem der Ansprüche 1 bis 3, wobei eine Flächennormale N des Interaktionsgeräts (6) und eine optische Achse A der Kamera (5) in einer Draufsicht des Selbstbedienungsterminals (1) einen Drehwinkel β von höchstens 70° bzw. 50° bzw. 30° einschließen.

5. Selbstbedienungsterminal (1) nach einem der Ansprüche 1 bis 4, wobei das Kamerasystem (3) bzw. das höhenvariable Modul (4) eine Höhe einer Minimalhöhenposition mh der Kamera (5) bzw. einer optische Achse A der Kamera (5) definiert, wobei die Höhe der Minimalhöhenposition mh relativ zu einem Fußboden bevorzugt höchstens 120 bzw. **110** bzw. 100 cm beträgt.

6. Selbstbedienungsterminal (1) nach einem der Ansprüche 1 bis 5, wobei das Kamerasystem (3) ein Gehäuse (8) aufweist, wobei das Gehäuse (8) das höhenvariable Modul (4) einhaust, wobei das höhenvariable Modul (4) vorzugsweise relativ zu dem Gehäuse (8) höhenvariabel ist.

7. Selbstbedienungsterminal (1) nach einem der Ansprüche 1 bis 6, wobei unterhalb des Interaktionsgeräts (6) ein Unterbau (10) angeordnet ist, wobei das Interaktionsgerät (6) und/oder der Unterbau (10) vorzugsweise baulich mit dem Kamerasystem (3) verbunden ist.

8. Selbstbedienungsterminal (1) nach einem der Ansprüche 1 bis 7, wobei das Selbstbedienungsterminal (1) einen Fuß (18) aufweist, wobei das Kamerasystem (3) und/oder der Unterbau (10) vorzugsweise auf dem Fuß (18) montiert ist/sind.

9. Selbstbedienungsterminal (1) nach einem der Ansprüche 1 bis 8, wobei das höhenvariable Modul (4) einen Bildschirm (11) aufweist.

10. Selbstbedienungsterminal (1) nach einem der Ansprüche 1 bis 9, wobei das Selbstbedienungsterminal (1) ein Lesegerät (2) zum Auslesen von physischen und/oder elektronischen Dokumenten - insbesondere von Identitäts- bzw. Ausweisdokumenten - und/oder einen Fingerabdruckscanner (9) umfasst.

11. Verwendung eines Selbstbedienungsterminals (1) nach einem der Ansprüche 1 bis 10 als vorbereitende Station für eine Entscheidungsstelle, insbesondere für einen Entscheidungsschalter, insbesondere für einen mit einer diensthabenden Person besetzten Entscheidungsschalter, wobei der Entscheidungsschalter vorzugsweise ein Kontrollschalter und insbesondere ein Grenzkontrollschalter ist, wobei die Entscheidungsstelle vorzugsweise innerhalb eines Flughafens angeordnet ist, wobei das Selbstbedienungsterminal (1) vorzugsweise ausgebildet ist, eine zu kontrollierende Person (7) und/oder Daten der zu kontrollierenden Person (7) an die Entscheidungsstelle weiterzuleiten, wobei das Selbstbedienungsterminal (1) von der Entscheidungsstelle bevorzugt wenigstens 5 bzw. 10 bzw. 15 m entfernt ist.
